# EUROPÄISCHE PATENTSCHRIFT

(11) **EP 4 288 902 B1**
(45) Veröffentlichungstag und Bekanntmachung des Hinweises auf die Patenterteilung: **23.10.2024**
(21) Anmeldenummer: 22708327.6
(22) Anmeldetag: 19.01.2022
(51) Int. Cl.: G06K 19/077, G06K 19/02

(54) **RFID-FUNKETIKETT ZUM BEFESTIGEN AN EINER TEXTILIE**
RFID TAG FOR FASTENING TO A TEXTILE
ÉTIQUETTE RFID DESTINÉE À ÊTRE FIXÉE À UN TEXTILE

(30) Priorität: 02.02.2021 DE 102021102349
(43) Veröffentlichungstag der Anmeldung: 13.12.2023
(73) Patentinhaber: Rietzler, Manfred, Tungmahamek, Sathorn, Bangkok, 10120 (TH)
(72) Erfinder: Rietzler, Manfred, Tungmahamek, Sathorn, Bangkok, 10120 (TH)
(74) Vertreter: advotec.
(86) Internationale Anmeldenummer: PCT/EP2022/051099
(87) Internationale Veröffentlichungsnummer: WO 2022/167221

(56) Entgegenhaltungen:
- WO-A1-02/07085
- US-A1- 2005 093 678
- US-A1- 2007 001 916
- US-A1- 2019 171 921

## Beschreibung

Die vorliegende Erfindung betrifft ein RFID-Funketikett zum Befestigen an einer Textilie, mit einer Transpondereinheit, welche auf einem biegsamen Trägermaterial angebracht ist und eine integrierte Schaltung mit einer über Kontaktflächen elektrisch verbundenen Leiterstruktur aufweist.

Weiterhin betrifft die Erfindung Verfahren zum Befestigen des erfindungsgemäßen RFID-Funketiketts an einer Textilie.

RFID-Funketiketten werden in vielfältigen Anwendungsbereichen zur Erkennung oder zum Identifizieren von Gegenständen eingesetzt. Insbesondere in Verbindung mit der Identifizierung von Textilien sind RFID-Funketiketten oftmals einer hohen mechanischen Beanspruchung ausgesetzt und verlangen nach einer unsichtbaren und unfühlbaren Integration in die Textilie. Gerade bei Kleidungsstücken wird daher eine nicht den Tragekomfort beeinträchtigende Integration des RFID-Funketiketts erwartet. Darüber hinaus muss stets eine zuverlässige Datenübertragung zwischen dem RFID-Funketikett und einem Lesegerät gewährleistet sein.

Die Offenlegungsschrift US 2005/0093678 A1 zeigt ein RFID-Funketikett mit einem Chip mit Kontaktflächen sowie eine Antennenstruktur, die aus zwei durch einen länglichen Schlitz getrennten Armen gebildet ist. Die Antennenstruktur besteht aus einer leitfähigen Schicht, die auf einem flexiblen Substrat aufgebracht ist. Das Funketikett kann auf einem Kleidungsstück befestigt werden.

In der Offenlegungsschrift US 2019/0171921 A1 ist ein in ein textiles Material eingebettetes RFID-Tag offenbart, wobei die Antenne in einem in dem flexiblen Material ausgebildeten Kanal fadenförmig eingebracht wird.

Der vorliegenden Erfindung liegt daher die Aufgabe zugrunde, ein RFID-Funketikett nahezu unsichtbar und unfühlbar unter Berücksichtigung der besonderen mechanischen Beanspruchung in die Textilie zu integrieren.

Diese Aufgabe wird dadurch gelöst, dass das Trägermaterial eine Leiterstruktur mit einem Längsschlitz aufweist, der die Kontaktflächen entgegengesetzter Polarität voneinander trennt, wobei das Trägermaterial streifenförmig mit einem Länge-Breite-Verhältnis, das ein Mehrfaches 10-faches beträgt, also vorzugsweise größer als 20 ist, geformt ist, wobei die Dicke des Trägermaterials vorzugsweise kleiner ist als dessen Breite. Die hieraus resultierende besonders schlanke Ausgestaltung des Trägermaterials führt dazu, dass die bei einer üblicherweise flächig ausgebildeten Folie in der Folienebene ausgeprägte Steifigkeit minimiert wird, also unabhängig von der Belastungsrichtung quer zur Längsachse des Trägermaterials im Wesentlichen keine Biegesteifigkeit vorhanden ist und die Festigkeit des Trägermaterials im Wesentlichen durch die Zugfestigkeit bestimmt ist.

Aufgrund der insbesondere bei Kleidungsstücken vorherrschenden inhomogenen Textilbeschaffenheit, der begrenzten Anbringungsflächen und der daraus resultierenden eingeschränkten Befestigungsmöglichkeiten kann die Leiterstruktur (Antennengeometrie) nicht beliebig dimensioniert werden.

Die Grundidee der vorliegenden Erfindung besteht somit darin, das Trägermaterial streifenförmig und extrem schmal auszubilden. Somit lässt sich das RFID-Funketikett in seiner Längsachse leicht biegen, ohne starr und behindernd zu wirken. Das erfindungsgemäße RFID-Funketikett besitzt damit zwar in Längsrichtung eine im Vergleich zu handelsüblichen RFID-Funketiketten sehr viel größere Ausdehnung, ist jedoch in seiner Breite und Höhe so klein bemessen, dass es in der Textilie nicht mehr zu ertasten ist und keine Biegesteifigkeit in die Textile einbringt, also im textilen Griff nicht wahrnehmbar ist.

Damit das metallisierte Trägermaterial in seiner Funktion als Leiterstruktur die Wirkung einer Dipolantenne entfaltet, weist die Leiterstruktur einen Längsschlitz auf, der den Abstand der in Längsrichtung des Trägermaterials verlaufenden Antennendipole bestimmt und der die Kontaktflächen entgegengesetzter Polarität voneinander trennt, um den Potentialunterschied (elektrische Spannung) der so ausgebildeten Dipolantenne (Faltdipol) abzugreifen und an die integrierte Schaltung (Chip) weiterzuleiten. Die Länge und Breite des Längsschlitzes bestimmen dabei primär die Resonanzfrequenz des RFID-Funketiketts.

Erfindungsgemäß ist der Längsschlitz T-förmig ausgebildet, wobei der in Längsrichtung des Trägermaterials verlaufende lange T-Schenkel den Abstand der in Längsrichtung des Trägermaterials verlaufenden Antennendipole bestimmt, wohingegen der kurze T-Schenkel die Kontaktflächen entgegengesetzter Polarität voneinander trennt, um den Potentialunterschied (elektrische Spannung) der Dipolantenne (Faltdipol) abzugreifen und an die integrierte Schaltung (Chip) weiterzuleiten.

Im Zusammenhang mit der vorliegenden Erfindung ist der Begriff Schlitz so zu verstehen, dass durch den Schlitz die Ausbildung der Leiterstruktur ermöglicht wird, der Schlitz also in dem die Leiterstruktur ausbildenden Material vorgesehen ist und nicht zusätzlich in dem Trägermaterial ausgebildet sein muss. Vorzugsweise ist das Trägermaterial mit einer Längsverstärkung versehen, die aus dem Trägermaterial selbst oder als Ergänzung zum Trägermaterial, insbesondere als ein sich in Längsrichtung des Trägermaterials erstreckender und mit dem Trägermaterial verbundener Längsfaden oder eine Längsfaser, ausgebildet sein kann. Beispielsweise kann das Trägermaterial als Faserverbundmaterial ausgebildet sein.

Damit ist eine hohe Reißfestigkeit bei geringer Biegesteifigkeit gewährleistet, sodass das RFID-Funketikett auch in dehnbare Textilien integriert werden kann und dennoch unauffällig wirkt.

Vorzugsweise ist das Länge-Breite-Verhältnis größer als 20, besonders vorzugsweise größer als 50 und ganz besonders vorzugsweise größer als 100.

Vorzugsweise ist das Trägermaterial als mit einer insbesondere als Oberflächenmetallisierung ausgebildeten Metallisierung versehenes Folienmaterial ausgeführt.

Bevorzugt ist das Trägermaterial als PET-Folie mit Aluminium-Metallisierung ausgeführt.

Durch diese Ausführung wird eine hohe mechanische Belastbarkeit bei gleichzeitig guten elektrischen (Antennen-)Eigenschaften und kosteneffizienter Herstellung erzielt.

In alternativer Ausgestaltung besteht das Trägermaterial aus einem dehnbaren Material.

Die Materialauswahl kann so erfolgen, dass das RFID-Funketikett-Trägermaterial eine ausreichende Dehnbarkeit ausweist. Hierbei ist allerdings darauf zu achten, dass der Bereich der integrierten Schaltung (Chip-Bereich) entlastet wird. Das dehnbare Trägermaterial kann ein kunststofffreies Material sein.

Weiter kann das Trägermaterial an Endbereichen vorgefaltet sein.

Um eine mechanische Entkopplung von der verformbaren Textilie zu bewirken und einer - auch schleichenden - Dehnung der Textilie entgegenwirken zu können, sind die (Dipol-)Endbereiche leicht vorgefaltet.

Weiterhin weisen die Endabschnitte des RFID-Funketiketts zur Anpassung der Übertragungsbandbreite spezifische runde oder spezifische eckige Konturen auf.

Die Endabschnitte des RFID-Funketiketts weisen dabei spezifisch an die Übertragungsbandbreite angepasste, einfache oder mehrfache runde oder eckige, beispielsweise gezackte oder schräg geschnittene, Kanten auf.

Die der Erfindung zugrunde liegende Aufgabe wird weiter gelöst durch ein Verfahren zum Befestigen des erfindungsgemäßen RFID-Funketiketts, wobei das RFID-Funketikett punktuell an genau einer Stelle befestigt wird.

Das RFID-Funketikett wird dabei lediglich in nur einem - bezogen auf die Längsausdehnung des RFID-Funketiketts kleinen - Bereich, vorzugsweise in dem Zentralbereich, wo der elektrische Schaltkreis (Chip) angeordnet ist, befestigt. Die beiden Schenkel des Trägermaterials, welche die Dipolschenkel der Leiterstruktur ausbilden, werden nicht mit der Textilie verbunden und verbleiben beweglich integriert in der Textilie, beispielsweise lediglich lose in dem Saum eingelegt.

Bevorzugt erfolgt die punktuelle Befestigung durch Nähen oder Verkleben.

Die punktuelle Befestigung erfolgt in fertigungstechnisch einfacher, zuverlässiger und kostengünstiger Weise durch Nähen oder Verkleben.

In einem alternativen Verfahren zur Befestigung des erfindungsgemäßen RFID-Funketiketts wird das RFID-Funketikett durch Umnähen schwimmend befestigt, wobei das RFID-Funketikett zwischen den Einstichstellen eines Nähfadens in der Textilie angeordnet ist.

Das RFID-Funketikett wird somit in der Art eines Tunnels von dem Nähfaden umschlossen in dem Textil beweglich gelagert, sodass nur geringe Kräfte, insbesondere keine Zugkräfte in Längsrichtung, auf das RFID-Funketikett übertragen werden.

In beiden vorgenannten Befestigungsverfahren kann in einem Befestigungsbereich des RFID-Funketiketts zusätzlich eine Verstärkungsnaht in der Textilie entlang einer Längsachse des RFID-Funketiketts eingezogen werden.

Die Verstärkungsnaht verhindert, dass sich die Textilie im Bereich des RFID-Funketiketts dehnt und stellt somit eine weitere einfache und wirkungsvolle Maßnahme zum Schutz des RFID-Funketiketts bei seiner Befestigung dar.

Weitere vorteilhafte Ausgestaltungsmerkmale ergeben sich aus der nachfolgenden Beschreibung und den Zeichnungen, die bevorzugte Ausführungsformen der Erfindung anhand von Beispielen erläutern.

Es zeigen:
- **Fig. 1**: eine bevorzugte Ausführungsform eines erfindungsgemäßen RFID-Funketiketts,
- **Fig. 2**: eine bekannte Ausführungsform,
- **Fig. 3**: eine Ausgestaltung mit vorgefalteten Endbereichen,
- **Fig. 4**: eine Befestigung mit zusätzlicher Verstärkungsnaht in der Textilie,
- **Fig. 5**: eine Befestigung durch Umnähen,
- **Fig. 6**: eine Transportanordnung bei der Herstellung,
- **Fig. 7**: die Transportanordnung nach Fig. 5 mit Transportrolle, und
- **Fig. 8**: die Transportanordnung nach Fig. 5 mit Trägerfaden.

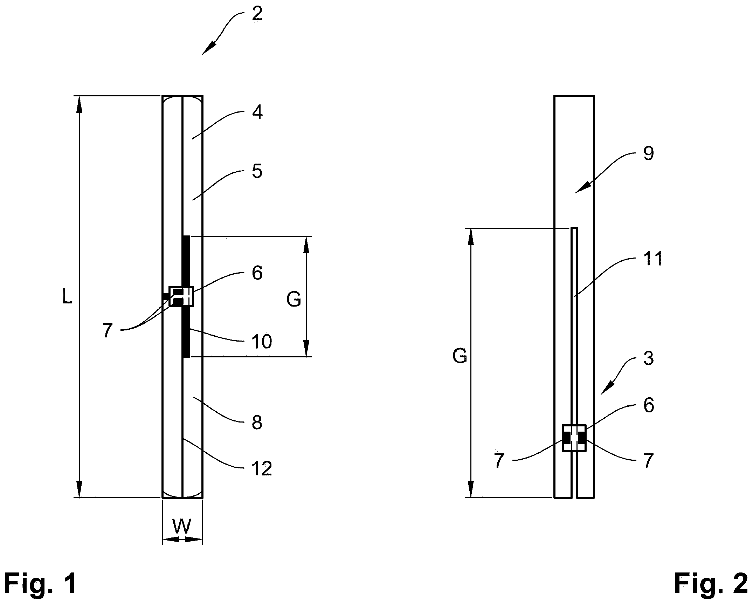

- **Fig. 1**: zeigt ein erfindungsgemäßes RFID-Funketikett 02 mit einer

Transpondereinheit 05, die auf einem biegsamen Trägermaterial 04 angebracht ist. Die Transpondereinheit 05 besteht aus einer integrierten Schaltung 06 (Chip) und einer mittels Kontaktflächen 07 mit der integrierten Schaltung 06 verbundenen Leiterstruktur 08 (Antenne).

Vorzugsweise besteht das Trägermaterial 04 aus einer dünnen PET-Folie mit Aluminiummetallisierung und bildet somit eine Leiterstruktur 08 aus.

Ein erfindungsgemäß T-förmiger Längsschlitz 10 in dem Trägermaterial 04 lässt das elektrisch leitfähige Trägermaterial 04 als Dipolantenne (Faltdipol) wirken, wobei die Kontaktflächen 07 mit der integrierten Schaltung 06 durch den T-förmigen Schlitz 10 in ihrer Polarität getrennt werden, um die Spannung an den Dipolenden abzugreifen. Die resonanzbestimmende Länge G des Längsschlitzes liegt vorzugsweise in einem Bereich von 30 bis 50 mm.

Das Größenverhältnis Länge L zu Breite W des Trägermaterials 04 beträgt vorzugsweise mehr als 50, wodurch ein in seiner Dimensionierung extrem schmales, nahezu fadenförmiges RFID-Funketikett 02 ausgebildet wird. Beispielsweise ist das RFID-Funketikett 02 mit einer Länge L=134 mm und einer Breite W=0,5 bis 2 mm ausgeführt.

Dabei sind die in den Figuren dargestellten Anordnungen schematische, nicht maßstabsgerechte Darstellungen.

**Fig. 2** zeigt in einer bekannten Ausführungsform ein RFID-Funketikett 3, das zur Ausbildung einer Leiterstruktur 9 einen Längsschlitz 11 aufweist, der sowohl den Abstand der in Längsrichtung des Trägermaterials verlaufenden Antennendipole bestimmt als auch die Kontaktflächen 7 entgegengesetzter Polarität voneinander trennt, um den Potentialunterschied der so ausgebildeten Dipolantenne abzugreifen und an die integrierte Schaltung 6 weiterzuleiten.

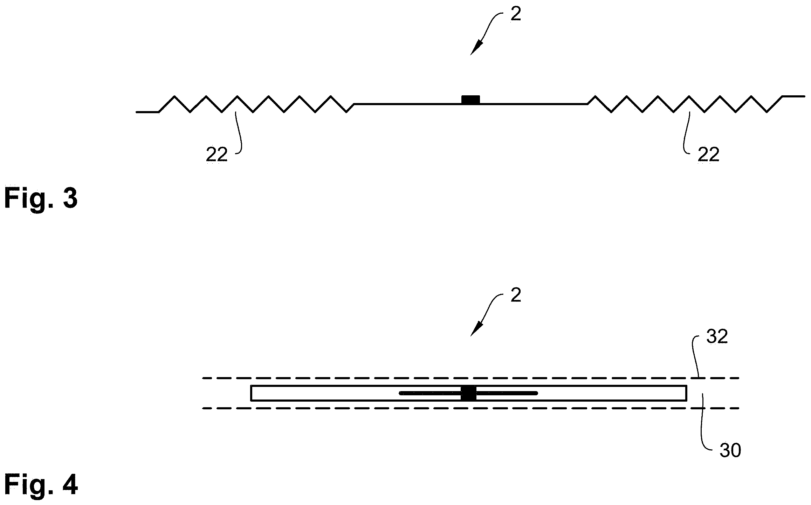

**Fig. 3** zeigt ein in seinen Endbereichen 22 vorgefaltetes RFID-Funketikett 02. Die leicht vorgefalteten Endbereiche 22 vermindern die Zugkraft auf den mit dem Chip belegten Zentralbereich des RFID-Funketiketts 02 und wirken einer (schleichenden) Dehnung der Textilie 30 entgegen.

**Fig. 4** zeigt eine Befestigung des RFID-Funketiketts 02 auf der Textilie 30. Zur Verstärkung und Reduzierung der auf das RFID-Funketikett 02 einwirkenden Kräfte ist die Textilie 30 in dem Bereich des RFID-Funketiketts 02 mit einer Verstärkungsnaht 32 versehen.

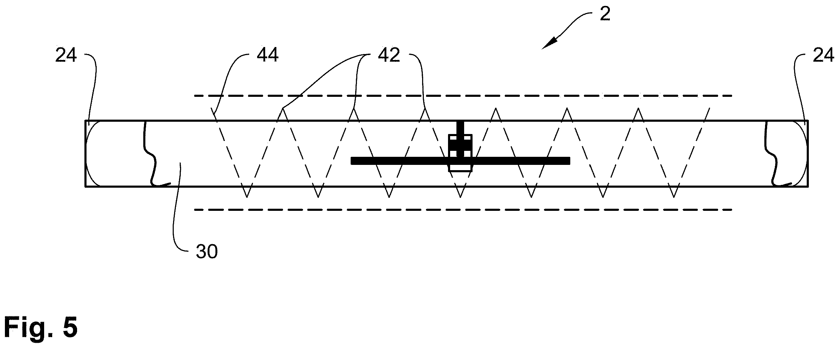

**Fig. 5** zeigt eine Befestigung des RFID-Funketiketts 02 durch Umnähen mit einem Nähfaden 44. Dabei sind die Einstichstellen 42 des Nähfadens 44 längsseitig außerhalb des RFID-Funketiketts 02 angeordnet, sodass das RFID-Funketikett 02 zwischen den Einstichstellen 42 schwimmend gelagert ist.

Die Endabschnitte des RFID-Funketiketts 02 weisen zur Anpassung der Übertragungsbandbreite spezifische runde oder spezifische eckige Konturen 24 auf.

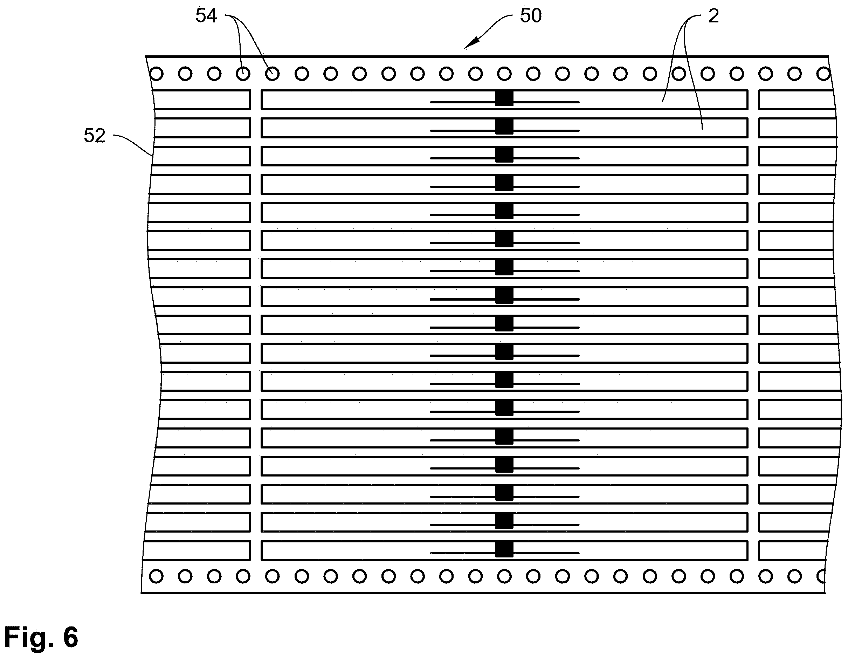

**Fig. 6** zeigt eine Transportanordnung 50, bei der die RFID-Funketiketten 02 auf einer Transportfolie 52 mit Transportlöchern 54 in Längsrichtung angeordnet sind. Die Längsanordnung bietet den Vorteil, dass das Aluminium als Bestandteil des Trägermaterials 04 in Laufrichtung zum RFID-Funketikett 02 aufgebracht wird und somit bei einer Zugbeanspruchung widerstandsfähiger ist, was sich wiederum im Hinblick auf die Reißfestigkeit bei Dehnung als Vorteil erweist.

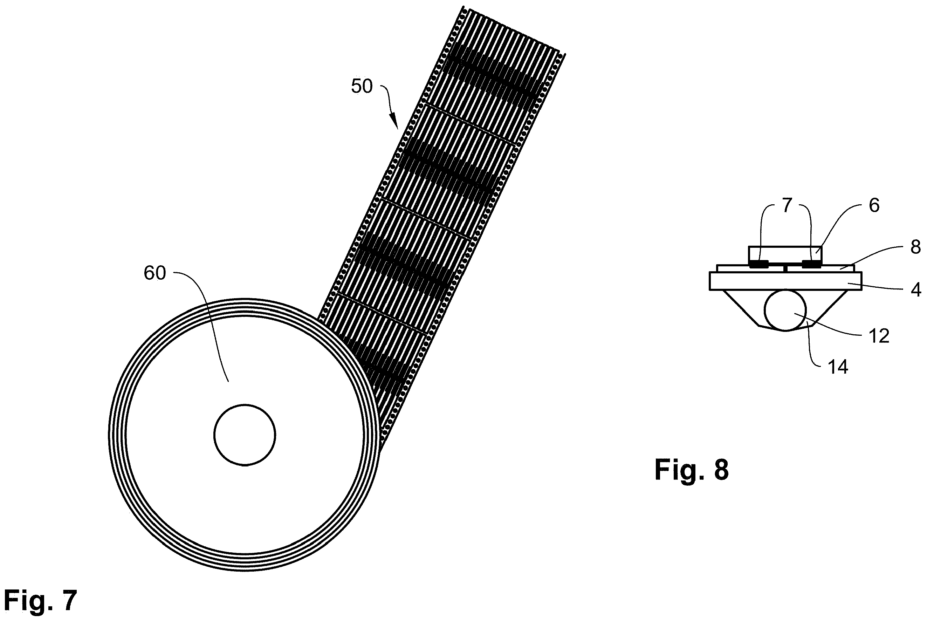

**Fig. 7** zeigt zur Verdeutlichung schematisch die Transportanordnung 50 bei der Abwicklung von einer Transportrolle 60.

Das Rollenformat bietet sich bei der Herstellung großer Stückzahlen an und eignet sich während der Textilherstellung insbesondere für die Zufuhr des RFID-Funketiketts 02.

**Fig. 8** zeigt, wie bei der vorgenannten Herstellung mit Hilfe der Transportrolle 60 zusätzlich ein Trägerfaden als Längsverstärkung 12 auf der Rückseite des Trägermaterials 4 des RFID-Funketiketts 02 angebracht werden kann. Der Trägerfaden 12 ist dabei großzügig in einem Klebstoffbett 14 eingebunden.

## Patentansprüche

1. RFID-Funketikett (2, 3) zum Befestigen an einer Textilie (30), mit einer Transpondereinheit (5), welche auf einem biegsamen Trägermaterial (4) angebracht ist und eine integrierte Schaltung (6) mit einer über Kontaktflächen (7) elektrisch verbundenen Leiterstruktur (8, 9) aufweist,
**dadurch gekennzeichnet,**
**dass** das Trägermaterial (4) als Leiterstruktur (8) mit einem Längsschlitz (10, 11) ausgebildet ist, der als T-förmiger Schlitz ausgeführt ist, wobei der in Längsrichtung des Trägermaterials (4) verlaufende lange T-Schenkel den Abstand der in Längsrichtung des Trägermaterials (4) verlaufenden Antennendipole bestimmt, wohingegen der kurze T-Schenkel die Kontaktflächen (7) entgegengesetzter Polarität voneinander trennt, wobei das Trägermaterial (4) streifenförmig mit einem Länge (L)/Breite (W)-Verhältnis, das ein Mehrfaches 10-faches beträgt, geformt ist.

2. RFID-Funketikett (2, 3) nach Anspruch 1,
**dadurch gekennzeichnet,**
**dass** das Länge-Breite-Verhältnis größer als 20 ist.

3. RFID-Funketikett (2, 3) nach Anspruch 1,
**dadurch gekennzeichnet,**
**dass** das Länge-Breite-Verhältnis größer als 50 ist.

4. RFID-Funketikett (2, 3) nach Anspruch 1,
**dadurch gekennzeichnet,**
**dass** das Länge-Breite-Verhältnis größer als 100 ist

5. RFID-Funketikett (2, 3) nach einem der vorangehenden Ansprüche, **dadurch gekennzeichnet,**
**dass** die Dicke des Trägermaterials kleiner ist als dessen Breite.

6. RFID-Funketikett (2, 3) nach einem der vorangehenden Ansprüche, **dadurch gekennzeichnet,**
**dass** das Trägermaterial mit einer Längsverstärkung (12) versehen ist.

7. RFID-Funketikett (2, 3) nach einem der vorangehenden Ansprüche, **dadurch gekennzeichnet,**
**dass** das Trägermaterial als PET-Folie mit Aluminium-Metallisierung ausgeführt ist.

8. RFID-Funketikett (2, 3) nach einem der vorangehenden Ansprüche, **dadurch gekennzeichnet,**
**dass** das Trägermaterial (4) aus einem dehnbaren Material ist.

9. RFID-Funketikett (2) nach einem der vorangehenden Ansprüche, **dadurch gekennzeichnet,**
**dass** das Trägermaterial (4) an Endbereichen (22) vorgefaltet ist.

10. RFID-Funketikett (2, 3) nach einem der vorangehenden Ansprüche, **dadurch gekennzeichnet,**
**dass** Endabschnitte des RFID-Funketiketts (2) zur Anpassung der Übertragungsbandbreite spezifische runde oder spezifische eckige Konturen (24) aufweisen.

11. Verfahren zum Befestigen des RFID-Funketiketts (2, 3) nach Anspruch 1 an einer Textilie (30),
**dadurch gekennzeichnet,**
**dass** das RFID-Funketikett (2) punktuell an genau einer Stelle befestigt wird.

12. Verfahren nach Anspruch 12,
**dadurch gekennzeichnet,**
**dass** die punktuelle Befestigung durch Nähen oder Verkleben erfolgt.

13. Verfahren zum Befestigen des RFID-Funketiketts (2, 3) nach Anspruch 1 an einer Textilie (30),
**dadurch gekennzeichnet,**
**dass** das RFID-Funketikett (2) durch Umnähen schwimmend befestigt wird, wobei das RFID-Funketikett (2) zwischen den Einstichstellen (42) eines Nähfadens (44) in der Textilie (30) angeordnet ist.

## Claims

1. An RFID tag (2, 3) for being fastened to a textile (30), the RFID tag (2, 3) having a transponder unit (5), which is attached to a bendable carrier material (4) and has an integrated circuit (6) having a conductor structure (8, 9) electrically connected via contact surfaces (7),
**characterised in that**
the carrier material (4) is designed as a conductor structure (8) having a longitudinal slot (10, 11) being a T-shaped slot, wherein the long T-leg extending in the longitudinal direction of the carrier material (4) determines the distance of the antenna dipoles extending in the longitudinal direction of the carrier material (4), whereas the short T-leg separates the contact surfaces (7) of opposite polarity from each other, the carrier material (4) being strip-shaped and having a length (L)-to-width (W) ratio which is a multiple of ten.

2. The RFID tag (2, 3) according to claim 1,
**characterised in that**
the length-to-width ratio is greater than 20.

3. The RFID tag (2, 3) according to claim 1,
**characterised in that**
the length-to-width ratio is greater than 50.

4. The RFID tag (2, 3) according to claim 1,
**characterised in that**
the length-to-width ratio is greater than 100.

5. The RFID tag (2, 3) according to any one of the preceding claims, **characterised in that**
the thickness of the carrier material is less than its width.

6. The RFID tag (2, 3) according to any one of the preceding claims, **characterised in that**
the carrier material is equipped with a longitudinal reinforcement (12).

7. The RFID tag (2, 3) according to any one of the preceding claims, **characterised in that**
the carrier material is designed as a PET film having an aluminium metallization.

8. The RFID tag (2, 3) according to any one of the preceding claims, **characterised in that**
the carrier material (4) is made of an elastic material.

9. The RFID tag (2) according to any one of the preceding claims, **characterised in that**
the carrier material (4) is pre-folded at the end areas (22).

10. The RFID tag (2, 3) according to any one of the preceding claims,
**characterised in that**
end sections of the RFID tag (2) have specific round or specific angular contours (24) for adjusting the transmission band width.

11. A method for fastening the RFID tag (2, 3) according to claim 1 to a textile (30),
**characterised in that**
the RFID tag (2) is fastened precisely in one position.

12. The method according to claim 11,
**characterised in that**
the precise fastening takes place via sewing or adhesive bonding.

13. The method for fastening the RFID tag (2, 3) according to claim 1 to a textile (30),
**characterised in that**
the RFID tag (2) is float-fastened via sewing across it, the RFID tag (2) being disposed between the punctures (42) of a sewing thread (44) in the textile (30).

## Revendications

1. Étiquette RFID (2, 3) pour être attachée à un textile (30), l'étiquette RFID (2, 3) ayant une unité de transpondeur (5), qui est attachée sur un matériau de support (4) pliable et a un circuit (6) intégré ayant une structure de conducteur (8, 9) électriquement connectée via des surfaces de contact (7),
**caractérisée en ce que**
le matériau de support (4) est conçu comme une structure de conducteur (8) ayant une fente (10, 11) longitudinale en forme de T, dans lequel la patte en T longue s'étendant dans la direction longitudinale du matériau de support (4) détermine la distance des dipôles d'antenne s'étendant dans la direction longitudinale du matériau de support (4), tandis que la patte en T courte sépare les surfaces de contact (7) de polarité opposée, le matériau de support (4) étant en forme de bande et ayant un rapport longueur (L)/largeur (W) qui est un multiple de dix.

2. Étiquette RFID (2, 3) selon la revendication 1,
**caractérisée en ce que**
le rapport longueur/largeur est supérieur à 20.

3. Étiquette RFID (2, 3) selon la revendication 1,
**caractérisée en ce que**
le rapport longueur/largeur est supérieur à 50.

4. Étiquette RFID (2, 3) selon la revendication 1,
**caractérisée en ce que**
le rapport longueur/largeur est supérieur à 100.

5. Étiquette RFID (2, 3) selon l'une quelconque des revendications précédentes,
**caractérisée en ce que**
l'épaisseur du matériau de support est inférieure à sa largeur.

6. Étiquette RFID (2, 3) selon l'une quelconque des revendications précédentes,
**caractérisée en ce que**
le matériau de support est équipé d'un renfort (12) longitudinal.

7. Étiquette RFID (2, 3) selon l'une quelconque des revendications précédentes,
**caractérisée en ce que**
le matériau de support est conçu comme film PET ayant une métallisation en aluminium.

8. Étiquette RFID (2, 3) selon l'une quelconque des revendications précédentes,
**caractérisée en ce que**
le matériau de support (4) est constitué d'un matériau élastique.

9. Étiquette RFID (2) selon l'une quelconque des revendications précédentes,
**caractérisée en ce que**
le matériau de support (4) est pré-plié à des zones d'extrémité (22).

10. Étiquette RFID (2, 3) selon l'une quelconque des revendications précédentes,
**caractérisée en ce que**
les sections d'extrémité de l'étiquette RFID (2) ont des contours (24) ronds ou angulaires spécifiques pour ajuster la largeur de la bande de transmission.

11. Procédé de fixation de l'étiquette RFID (2, 3) selon la revendication 1 sur un textile (30),
**caractérisé en ce que**
l'étiquette RFID (2) est fixée précisément dans une position.

12. Procédé selon la revendication 11,
**caractérisé en ce que**
la fixation précise se fait par couture ou par collage.

13. Procédé pour fixer l'étiquette RFID (2, 3) selon la revendication 1 à un textile (30),
**caractérisé en ce que**
l'étiquette RFID (2) est fixée de manière flottante par couture en travers, l'étiquette RFID (2) étant disposée entre les perforations (42) d'un fil de couture (44) dans le textile (30).
